Europäisches Patentamt

European Patent Office

Office européen des brevets

(11) Numéro de publication: **0 436 418 A1**

# DEMANDE DE BREVET EUROPEEN

(21) Numéro de dépôt: 90403604.3

(22) Date de dépôt: **14.12.90**

(51) Int. Cl.5: **A01J 25/06**

(30) Priorité: **02.01.90 FR 9000010**

(43) Date de publication de la demande:
**10.07.91 Bulletin 91/28**

(84) Etats contractants désignés:
**AT BE CH DE DK ES GB GR IT LI LU NL SE**

(71) Demandeur: **SOCIETE D'ETUDE, REALISATION ET VENTE A L'INDUSTRIE, SERVI S.A.**
**Zone Industrielle Sud, Route de Tours**

**F-37130 Langeais(FR)**

(72) Inventeur: **Papot, Daniel**
**2, rue Foulques Nerra**
**F-37130 Langeais(FR)**

(74) Mandataire: **Lemoine, Robert et al**
**Cabinet Malémont 42, Avenue du Président Wilson**
**F-75116 Paris(FR)**

(54) Cuve fromagère pour le traitement du caillé de lait utilisé pour l'élaboration du fromage.

(57) La cuve fromagère comprend une paroi latérale semi-cylindrique (1), un arbre longitudinal (7) portant un outil de tranchage ou de brassage (8), et des moyens de commande agissant sur l'arbre (7) de façon à déplacer l'outil entre deux positions angulaires extrêmes (P₁, P₂) symétriques par rapport au plan longitudinal médian de la cuve.

Les moyens de commande sont prévus d'une part pour entraîner l'arbre (7) le long d'une trajectoire cylindrique (C) dont l'axe coïncide avec l'axe longitudinal de la paroi (1), cette trajectoire comprenant un tronçon inférieur et un tronçon supérieur délimités par les positions extrêmes (P₁, P₂), et d'autre part pour faire tourner l'arbre 7 sur lui-même de façon à ce que l'outil s'avance radialement dans la cuve pendant que ledit arbre se déplace le long du tronçon inférieur de sa trajectoire (C).

Cette cuve est utilisable pour réaliser des opérations de tranchage et de brassage.

FIG. 4

## "CUVE FROMAGÈRE POUR LE TRAITEMENT DU CAILLÉ DE LAIT UTILISÉ POUR L'ÉLABORATION DU FROMAGE"

La présente invention concerne une cuve fromagère pour le traitement du caillé de lait utilisé pour l'élaboration du fromage, comprenant une paroi latérale semi-cylindrique, un arbre longitudinal portant au moins un outil de tranchage ou de brassage, cet arbre s'étendant parallèlement à l'axe longitudinal de la paroi latérale, et des moyens de commande agissant sur l'arbre longitudinal de façon à déplacer l'outil entre deux positions angulaires extrêmes symétriques par rapport au plan longitudinal médian de la cuve et dans lesquelles l'extrémité libre de l'outil est adjacente à la fois à la paroi latérale et à la surface libre du caillé.

On sait que le caillé, qui résulte de la coagulation du lait sous l'action de la présure et des ferments lactiques, doit être tranché et brassé pour qu'il puisse se séparer convenablement du sérum.

En général, les opérations de tranchage sont réalisées transversalement et longitudinalement afin de découper le caillé en petits cubes. Quant aux opérations de brassage, elles sont réalisées transversalement afin de remonter les cubes en surface et de les maintenir en suspension dans le sérum

Les cuves fromagères du type décrit en préambule ont été mises au point pour réaliser successivement le tranchage transversal et le brassage. Mais à l'heure actuelle, ces cuves ne donnent pas pleinement satisfaction d'une part parce qu'elles ne permettent pas de réaliser ces opérations avec la rigueur géométrique nécessaire et d'autre part parce que leurs moyens de commande sont compliqués, difficiles à entretenir et sujets à des pannes relativement fréquentes.

La présente invention se propose plus particulièrement de remédier à ces inconvénients et, pour ce faire, elle pour objet une cuve fromagère du type précité qui se caractérise en ce que ses moyens de commande sont prévus d'une part pour entraîner l'arbre longitudinal le long d'une trajectoire cylindrique dont l'axe coïncide avec l'axe longitudinal de la paroi latérale, cette trajectoire comprenant un tronçon inférieur et un tronçon supérieur délimités par les positions extrêmes de l'outil, et d'autre part pour faire tourner l'arbre longitudinal sur lui-même de façon à ce que l'outil s'avance radialement dans la cuve jusqu' au voisinage immédiat de la paroi latérale de celle-ci pendant que ledit arbre longitudinal se déplace le long du tronçon inférieur de sa trajectoire cylindrique.

Pour réaliser le tranchage transversal du caillé, les moyens de commande déplacent l'arbre longitudinal le long du tronçon inférieur de sa trajectoire cylindrique, depuis une position extrême de l'outil à l'autre, l'outil utilisé étant un outil de tranchage.

Par ailleurs, pour réaliser le brassage du caillé, les moyens de commande entraînent l'arbre longitudinal dans un sens déterminé le long de sa trajectoire cylindrique et, pendant que ledit arbre longitudinal se déplace le long du tronçon supérieur de sa trajectoire, ils l'entraînent en rotation sur lui-même dans le sens inverse de son déplacement le long de sa trajectoire cylindrique, de façon à ce que l'extrémité libre de l'outil de brassage utilisé se déplace sensiblement parallèlement à la surface libre du caillé.

Selon un mode de réalisation préféré de l'invention, l'arbre longitudinal est monté à rotation, au voisinage de ses extrémités, sur deux bielles parallèles solidaires en rotation de deux arbres-supports dont les axes coïncident avec l'axe longitudinal de la paroi latérale.

Ce montage particulièrement simple permet de fabriquer la cuve dans des conditions très compétitives.

Lorsque la cuve est de faible longueur, le déplacement de l'arbre longitudinal sur sa trajectoire cylindrique peut être assuré en reliant un seul arbre-support à un ensemble moto-réducteur.

En revanche, lorsque la cuve est de grande longueur, il est préférable que ce déplacement soit assuré en reliant les deux arbres-supports à l'ensemble moto-réducteur, par exemple par l'intermédiaire d'une transmission comprenant deux premiers pignons coniques calés respectivement sur les deux arbres-supports, deux seconds pignons coniques engrenant respectivement avec les premiers pignons coniques, deux troisièmes pignons coniques montés à l'une des extrémités de deux arbres de liaison transversaux portant les seconds pignons coniques à leur autre extrémité, et deux quatrièmes pignons coniques engrenant respectivement avec les troisièmes pignons coniques, les quatrièmes pignons coniques étant respectivement montés aux extrémités d'un arbre de liaison longitudinal relié à l'arbre de sortie de l'ensemble moto-réducteur.

L'entraînement en rotation de l'arbre longitudinal sur lui-même peut par ailleurs être réalisé en reliant l'une au moins de ses extrémités à un second ensemble moto-réducteur. Mais lorsque la cuve est de grande dimension, il est préférable que son entraînement en rotation soit réalisé en reliant ses deux extrémités au second ensemble moto-réducteur, par exemple par une transmission comprenant deux premiers pignons droits calés respectivement sur les deux extrémités de l'arbre longitudinal, deux seconds pignons droits engrenant respectivement avec les premiers pignons droits et avec deux troisièmes pignons droits respectivement portés par deux fourreaux entourant les arbres-supports, deux cinquièmes pignons coniques portés respectivement par les fourreaux et engrenant respectivement avec deux sixièmes pignons coniques, deux septièmes pignons coniques prévus à l'une des extrémités de deux seconds arbres de liaison transversaux portant respectivement les sixièmes pignons coniques à leur autre extrémité, et deux huitièmes pignons coniques engrenant respectivement avec les septièmes pignons coniques, les huitièmes pignons coniques étant respectivement montés aux extrémités d'un second arbre de liaison longitudinal relié à l'arbre de sortie du second ensemble moto-réducteur.

Avantageusement, les ensembles moto-réducteurs comportent des codeurs incrémentaux pour contrôler point par point les positions relatives des arbres de liaison longitudinaux, et par suite pour contrôler à chaque instant la position de l'outil utilisé par rapport à la paroi latérale de la cuve.

Selon une autre caractéristique de l'invention, les outils de tranchage transversal et de brassage sont diamétralement opposés sur l'arbre longitudinal.

Pour effectuer une opération de brassage après une opération de tranchage et inversement, il n'est plus nécessaire maintenant de démonter l'outil qui a servi pour le remplacer par l'outil qui doit servir. Il suffit en effet de ne faire tourner que très légèrement l'arbre longitudinal le long de sa trajectoire cylindrique pour pouvoir utiliser le nouvel outil, ce qui demande peu de temps.

Un mode d'exécution de la présente invention sera décrit ci-après à titre d'exemple nullement limitatif en référence aux dessins annexés dans lesquels :

- la figure 1 est une vue en perspective schématique d'une cuve fromagère conforme à l'invention ;
- la figure 2 est une vue schématique en coupe partielle montrant les moyens prévus pour déplacer l'arbre longitudinal sur une trajectoire cylindrique et pour le faire tourner sur lui-même ;
- la figure 3 est une vue de côté schématique de la cuve, montrant l'outil de tranchage transversal en cours d'utilisation ; et
- la figure 4 est une vue de côté analogue à la figure 3, mais montrant l'outil de brassage en cours d'utilisation.

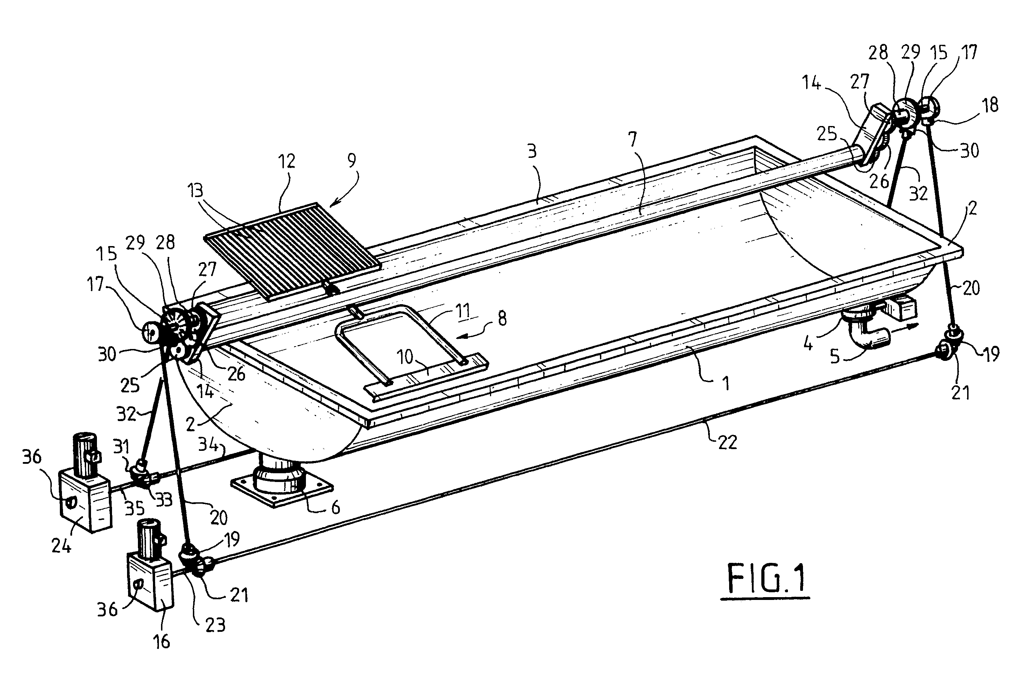

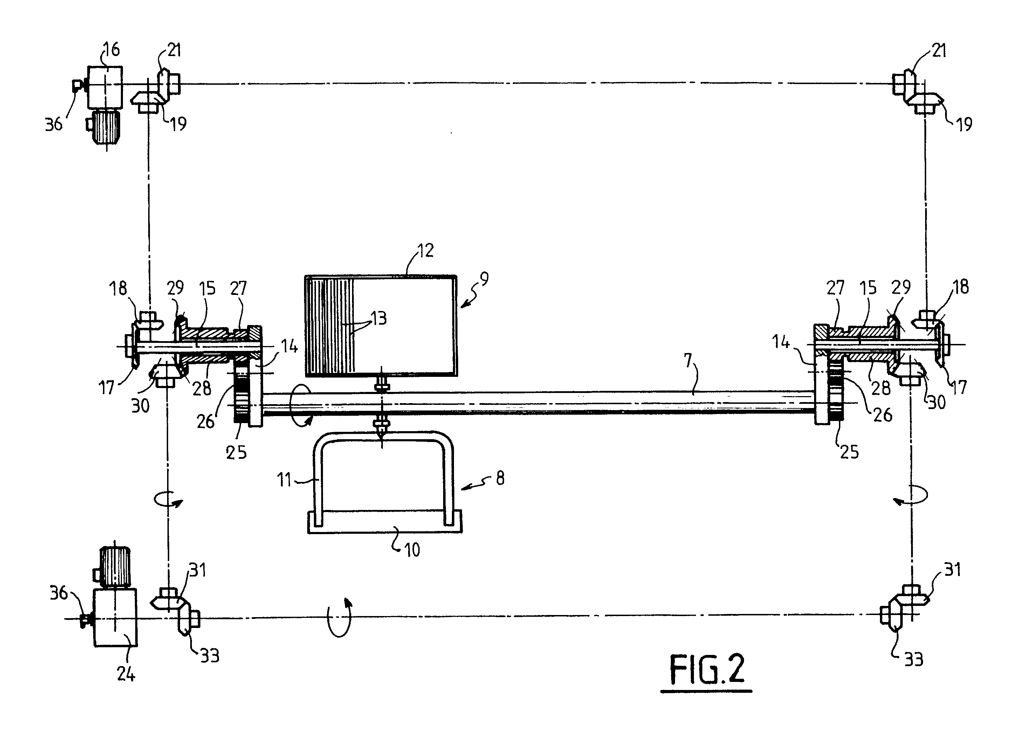

La cuve fromagère que l'on peut voir sur les figures 1 et 2 comporte d'une manière connue en soi une paroi latérale semi-cylindrique 1, deux parois transversales 2 fixées aux extrémités de la paroi latérale, un rebord périphérique 3 délimitant son entrée, une vanne 4 montée dans une conduite de vidange 5 prévue au voisinage de l'une des parois transversales, et un pied 6 supportant la paroi latérale au voisinage de l'autre paroi transversale, ce pied étant réglable en hauteur afin de modifier l'inclinaison de la cuve et de faciliter, le moment venu, l'évacuation de son contenu par la conduite de vidange 5.

La cuve comprend également un arbre longitudinal 7 portant des outils de brassage 8 (dont un seul est représenté) montés les uns à la suite des autres dans un même plan, ainsi que des outils de tranchage transversal 9 (dont un seul est également représenté) diamétralement opposés aux outils de brassage.

Les outils de brassage et de tranchage sont de conception classique. Dans l'exemple représenté, les outils de brassage comprennent une raclette 10 fixée parallèlement à l'axe longitudinal de la cuve à l'extrémité libre des branches d'un corps en U 11 dont la base est fixée à l'arbre longitudinal. Quant aux outils de tranchage, ils comprennent un cadre 12 fixé à l'arbre longitudinal par l'intermédiaire de l'un de ses côtés et des lamelles 13 s'étendant dans le plan du cadre, perpendiculairement à l'arbre longitudinal.

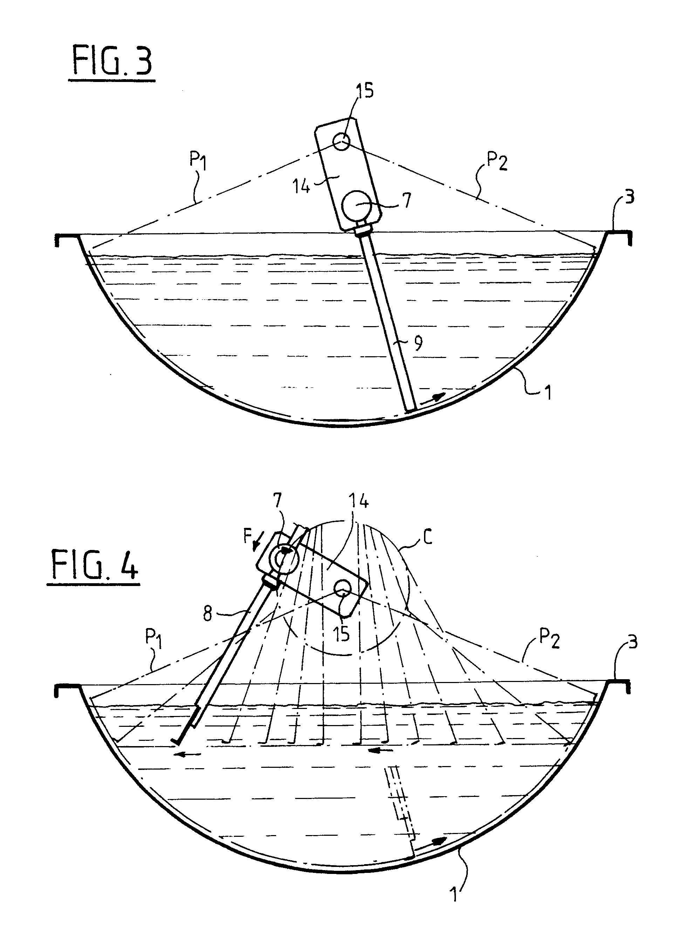

En se référant plus particulièrement aux figures 3 et 4, on remarquera que les outils de brassage et de tranchage ont une longueur telle que la distance séparant leur extrémité libre de l'axe longitudinal de la cuve est légèrement inférieure au rayon de celle-ci.

L'axe longitudinal 7 est monté à rotation, au voisinage de ses extrémités, sur deux bielles parallèles 14 solidaires en rotation de deux arbres-supports 15 dont les axes coïncident avec l'axe longitudinal de la cuve.

Les arbres-supports 15 font saillie sur les faces opposées des bielles et s'étendent donc en sens inverse. Ils sont reliés à un ensemble moto-réducteur 16 par l'intermédiaire d'une transmission qui, dans l'exemple représenté, comprend deux premiers pignons coniques 17 calés respectivement sur les deux arbres-supports 15, au niveau de l'extrémité libre de ceux-ci, deux seconds pignons coniques 18 engrenant respectivement avec les premiers pignons 17, deux troisièmes pignons coniques 19 montés à l'une des extrémités de deux arbres de liaison transversaux 20 portant les seconds pignons 18 à leur autre extrémité, et deux quatrièmes pignons coniques 21 engrenant respectivement avec les troisièmes pignons 19, les quatrièmes pignons 21 étant respectivement montés aux extrémités d'un arbre de liaison longitudinal 22 relié à l'arbre de sortie 23 de l'ensemble moto-réducteur 16.

Ainsi, grâce à ce montage particulier, l'ensemble moto-réducteur 16 peut déplacer l'arbre longitudinal 7 sur une trajectoire cylindrique C dont

l'axe longitudinal coïncide avec l'axe longitudinal de la cuve et qui est représentée en traits mixtes sur la figure 4.

L'arbre longitudinal 7 peut par ailleurs être entraîné en rotation sur les deux bielles 14 par un second moto-réducteur 24 auquel il est relié par l'intermédiaire d'une autre transmission. Dans l'exemple représenté, cette autre transmission comprend deux premiers pignons droits 25 calés respectivement sur les deux extrémités de l'arbre longitudinal 7, deux seconds pignons droits 26 montés à rotation sur les bielles 14 et engrenant respectivement avec les pignons droits 25 et avec deux troisièmes pignons droits 27 respectivement portés par deux fourreaux 28 entourant les arbres-supports 15, deux cinquièmes pignons coniques 29 portés respectivement par les fourreaux 28 et engrenant respectivement avec deux sixièmes pignons coniques 30, deux septièmes pignons coniques 31 prévus à l'une des extrémités de deux seconds arbres de liaison transversaux 32 portant respectivement les sixièmes pignons 30 à leur autre extrémité, et deux huitièmes pignons coniques 33 engrenant respectivement avec les septièmes pignons 31, les huitièmes pignons 33 étant respectivement montés aux extrémités d'un second arbre de liaison longitudinal 34 relié à l'arbre de sortie 35 du second ensemble moto-réducteur 24.

Pour être complet, on précisera que les ensembles moto-réducteurs 16 et 24 comportent des codeurs incrémentaux 36 permettant de contrôler à tout moment les positions relatives des arbres de liaison longitudinaux 22 et 24 et donc la position des outils de brassage 8 et de tranchage 9 par rapport à la cuve.

La cuve fromagère selon l'invention peut être utilisée aussi bien pour effectuer des opérations de tranchage transversal que des opérations de brassage. Le bon déroulement de ces opérations nécessite que les outils utilisés se déplacent entre les deux positions angulaires extrêmes $P_1$, $P_2$ (représentées par des traits mixtes sur les figures 3 et 4) qui sont symétriques par rapport au plan longitudinal médian de la cuve et dans lesquelles l'extrémité libre des outils utilisés est adjacente à la fois à la paroi latérale 1 de la cuve et à la surface libre du caillé.

Ainsi pour réaliser le tranchage transversal du caillé, qui est illustré par la figure 3, on actionne les ensembles moto-réducteurs 16 et 24 tout d'abord pour amener l'outil 9 dans la position $P_1$, puis pour déplacer l'outil 9 de la position $P_1$ à la position $P_2$. Pendant le tranchage, l'outil 9 s'étend toujours radialement dans la cuve de sorte que son extrémité libre reste au voisinage immédiat de la paroi latérale 1 de celle-ci.

On indiquera ici à toutes fins utiles que l'ensemble moto-réducteur 24 est actionné pendant la réalisation du tranchage transversal afin que la rotation du pignon 27 compense celle des pignons 25 et 26 qui est provoquée par la rotation des bielles 14 sous la commande de l'ensemble moto-réducteur 16.

Pour réaliser le brassage du caillé, qui est quant à lui illustré par la figure 4, on actionne les ensembles moto-réducteurs 16 et 24 tout d'abord pour amener l'outil 8 dans la position $P_1$, puis pour déplacer l'arbre longitudinal 7 dans le sens de la flèche F le long de la trajectoire cylindrique C.

Pendant que l'arbre 7 se déplace le long du tronçon inférieur de la trajectoire C qui est délimité par les positions $P_1$ et $P_2$, l'outil 8 s'étend radialement dans le cuve de sorte que son extrémité libre reste au voisinage immédiat de la paroi latérale 1.

Puis, quand l'outil 8 arrive dans la position $P_2$ et que l'arbre 7 commence à se déplacer sur le tronçon supérieur de sa trajectoire cylindrique C, on actionne l'ensemble moto-réducteur 24 pour que l'arbre 7 tourne sur lui-même dans le sens inverse de la flèche F et permette à l'outil de revenir dans la position $P_1$ de façon à ce que son extrémité libre se déplace sensiblement parallèlement à la surface libre du caillé, comme illustré sur la figure 4.

En arrivant à la position $P_2$, l'outil 8 est donc prêt à décrire un nouveau cycle.

On fera bien entendu durer l'opération de brassage jusqu'à ce que le caillé soit parfaitement séparé du sérum.

A toutes fins utiles, on rappellera ici qu'entre les opérations de tranchage transversal et de brassage, on pratique un tranchage longitudinal avec un outil comprenant un cadre semi-circulaire dont le rayon est légèrement inférieur à celui de la paroi latérale de la cuve, et dans lequel sont tendus des fils horizontaux et verticaux.

Cet outil permet en effet de découper en petits cubes les lanières de caillé qui ont été préalablement découpées par l'outil de tranchage transversal.

## Revendications

1. Cuve fromagère pour le traitement du caillé de lait utilisé pour l'élaboration du fromage, comprenant une paroi latérale semi-cylindrique (1), un arbre longitudinal (7) portant au moins un outil de tranchage (9) ou de brassage (8), cet arbre s'étendant parallèlement à l'axe longitudinal de la paroi latérale, et des moyens de commande (16,24) agissant sur l'arbre longitudinal de façon à déplacer l'outil entre deux positions angulaires extrêmes symétriques par rapport au plan longitudinal médian de la cuve et dans lesquelles l'extrémité libre de l'outil est adjacente à la fois à la paroi latérale et à la surface libre du caillé, caractérisée en ce que les moyens de commande (16,24) sont prévus d'une part pour entraîner l'arbre longitudinal (7) le long d'une trajectoire cylindrique (C) dont l'axe coïncide avec l'axe longitudinal de la paroi latérale (1), cette trajectoire comprenant un tronçon inférieur et un tronçon supérieur délimités par les positions extrêmes ($P_1$,$P_2$) de l'outil, et d'autre part pour faire tourner l'arbre longitudinal (7) sur lui-même de façon à ce que l'outil (8 ou 9) s'avance radialement dans la cuve jusqu' au voisinage immédiat de la paroi latérale (1) de celle-ci pendant que ledit arbre longitudinal (7) se déplace le long du tronçon inférieur de sa trajectoire cylindrique (C).

2. Cuve fromagère selon la revendication 1, caractérisée en ce que pour réaliser le tranchage transversal du caillé, les moyens de commande (16,24) déplacent l'arbre longitudinal (7) le long du tronçon inférieur de sa trajectoire cylindrique (C), depuis une position extrême ($P_1$) de l'outil à l'autre ($P_2$), l'outil utilisé étant un outil de tranchage (9).

3. Cuve fromagère selon la revendication 1, caractérisée en ce que pour réaliser le brassage du caillé, les moyens de commande (16,24) entraînent l'arbre longitudinal (7) dans un sens déterminé le long de sa trajectoire cylindrique (C) et, pendant que ledit arbre longitudinal se déplace le long du tronçon supérieur de sa trajectoire, ils l'entraînent en rotation sur lui-même dans le sens inverse de son déplacement le long de sa trajectoire cylindrique, de façon à ce que l'extrémité libre de l'outil de brassage (8) utilisé se déplace sensiblement parallèlement à la surface libre du caillé.

4. Cuve fromagère selon l'une quelconque des revendications précédentes, caractérisée en ce que l'arbre longitudinal (7) est monté à rotation, au voisinage de ses extrémités, sur deux bielles parallèles (14) solidaires en rotation de deux arbres-supports (15) dont les axes coïncident avec l'axe longitudinal de la paroi latérale (1).

5. Cuve fromagère selon la revendication 4, caractérisée en ce que l'un au moins des arbres-supports (15) est relié à un ensemble moto-réducteur (16).

6. Cuve fromagère selon la revendication 5, caractérisée en ce que les deux arbres-supports (15) sont reliés à l'ensemble moto-réducteur (16) par l'intermédiaire d'une transmission comprenant deux premiers pignons coniques (17) calés respectivement sur les deux arbres-supports (15), deux seconds pignons coniques (18) engrenant respectivement avec les premiers pignons coniques (17), deux troisièmes pignons coniques (19) montés à l'une des extrémités de deux arbres de liaison transversaux (20) portant les seconds pignons coniques (18) à leur autre extrémité, et deux quatrièmes pignons coniques (21) engrenant respectivement avec les troisièmes pignons coniques (19), les quatrièmes pignons coniques (21) étant respectivement montés aux extrémités d'un arbre de liaison longitudinal (22) relié à l'arbre de sortie (23) de l'ensemble moto-réducteur (16).

7. Cuve fromagère selon la revendication 5 ou 6, caractérisée en ce que l'arbre longitudinal (7) est relié par l'une au moins de ses extrémités à un second ensemble moto-réducteur (24).

8. Cuve fromagère selon la revendication 7, caractérisée en ce que les deux extrémités de l'arbre longitudinal (7) sont reliées au second ensemble moto-réducteur (24) par une transmission comprenant deux premiers pignons droits (25) calés respectivement sur les deux extrémités de l'arbre longitudinal (7), deux seconds pignons (26) droits engrenant respectivement avec les premiers pignons droits (25) et avec deux troisièmes pignons droits (27) respectivement portés par deux fourreaux (28) entourant les arbres-supports (15), deux cinquièmes pignons coniques (29) portés respectivement par les fourreaux (28) et engrenant respectivement avec deux sixièmes pignons coniques (30), deux septièmes pignons coniques (31) prévus à l'une des extrémités de deux seconds arbres de liaison transversaux (32) portant respectivement les sixièmes pignons coniques (30) à leur autre extrémité, et deux huitièmes pignons coniques (33) engrenant respectivement avec les septièmes pignons coniques (31), les huitièmes pignons coniques (33) étant respectivement montés aux extrémités d'un second arbre de liaison longitudinal relié (34) à l'arbre de sortie (35) du second ensemble moto-réducteur (24).

9. Cuve fromagère selon les revendications 6 et 8, caractérisée en ce que les ensembles moto-réducteurs (16,24) comportent des codeurs incrémentaux (36) pour contrôler point par point les positions relatives des arbres de liaison longitudinaux (22,34).

10. Cuve fromagère selon l'une quelconque des revendications précédentes, caractérisée en ce que les outils de tranchage transversal (9) et de brassage (8) sont diamétralement opposés.

FIG.1

EP 0 436 418 A1

FIG.2

# FIG. 3

# FIG. 4

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 632 816 (CORBLIN S.A.) <br> * abrégé; figures 1-2 * <br> – – – | 1 | A 01 J <br> 25/06 |
| A | EP-A-0 093 647 (BURTON-CORBLIN) <br> * abrégé; figures 4-6 * <br> – – – | 1 | |
| A | FR-A-2 466 188 (BURTON-CORBLIN) <br> – – – | | |
| A | FR-A-2 365 288 (HERMANN WALDNER KG.) <br> – – – – – | | |

|  |
|---|
| **DOMAINES TECHNIQUES RECHERCHES (Int. Cl.5)** |
| A 01 J |

Le présent rapport de recherche a été établi pour toutes les revendications

| Lieu de la recherche | Date d'achèvement de la recherche | Examinateur |
|---|---|---|
| La Haye | 20 février 91 | NEHRDICH H.J |